# EUROPEAN PATENT APPLICATION

(11) **EP 4 358 366 A1**
(43) Date of publication of application: **24.04.2024**
(21) Application number: 22824706.0
(22) Date of filing: 10.05.2022
(51) Int. Cl.: H02K 1/04, H02K 5/08, H02K 15/14

(54) **STATOR UNIT, MOLDED MOTOR, AND METHOD OF MANUFACTURING STATOR UNIT**

(30) Priority: 18.06.2021 JP 2021101404
(71) Applicant: Panasonic Intellectual Property Management Co., Ltd., Kadoma-shi, Osaka 571-0057 (JP)
(72) Inventor: OCHIAI, Akihiro, Osaka 571-0057 (JP)
(74) Representative: SSM Sandmair
(86) International application number: PCT/JP2022/019798
(87) International publication number: WO 2022/264712

(57) **Abstract**

A stator unit includes: a stator core that faces a rotor included in a molded motor; a coil that is wound around the stator core; and a molded resin that covers the stator core and the coil, in which the stator core has a rotor facing surface that faces the rotor, and the molded resin covers the rotor facing surface.

## Description

### TECHNICAL FIELD

The present disclosure relates to a stator unit of a motor, a molded motor including the stator unit, and a method of manufacturing the stator unit.

### BACKGROUND ART

Conventionally, a molded motor having a structure in which a stator is covered with a molded resin is known. A molded motor includes a stator having a stator core and a coil wound around the stator core, a rotor that faces the stator, and a molded resin that covers the stator. The stator and the molded resin are configured as a stator unit. Specifically, the stator unit has a configuration in which the stator core and the coil are covered with the molded resin.

As a conventional technique of this type, PTL 1 discloses an inner rotor type molded motor. In the inner rotor type molded motor, the rotor is disposed inside the stator unit. In this case, an inner peripheral surface of the stator core in the stator unit becomes a rotor facing surface that faces the rotor.

When a stator unit is manufactured, a stator core around which a coil is wound is supported by a pin and disposed in a mold, and a molded resin is molded into a predetermined shape by injecting a liquid resin into the mold and curing the liquid resin.

At this time, in a conventional method of manufacturing a stator unit, a pin is brought into contact with the rotor facing surface in the stator core to support the stator core. Therefore, no molded resin is formed on the rotor facing surface of the stator core. For this reason, in a conventional stator unit, the rotor facing surface of the stator core is exposed. Therefore, for example, in a case where the stator core is used in a high-humidity environment, the stator core may be rusted. In particular, in a case where the molded motor is used in an environment with a lot of humidity such as moisture generated by opening and closing a door in a refrigerator, when the rotor facing surface that is a metal surface is exposed, the stator core is easy to be rusted from the rotor facing surface due to metal exposure.

When the rotor facing surface of the stator core is rusted, rust formed on the rotor facing surface may adversely affect a rotation operation of the rotor. For example, since an air gap between the rotor and the stator core is small, the rust formed on the rotor facing surface may come into contact with the rotor to prevent the rotor from rotating at a predetermined speed. Eventually, the rust may get stuck in the air gap between the rotor and the stator core, causing the rotor and the stator to lock.

Therefore, conventionally, an antirust coating is applied to the stator core in order to prevent the stator core from being rusted.

However, when the antirust coating is applied to the stator core, coating unevenness may occur, or coating peeling may occur due to mechanical contact.

### Citation List

### Patent Literature

PTL 1: WO 2021/010015 A1

### SUMMARY OF THE INVENTION

The present disclosure has been made to solve such problems. An object of the present disclosure is to provide a stator unit, a molded motor, and a method of manufacturing the stator unit that can suppress rust of a rotor facing surface of a stator core without applying the antirust coating.

In order to achieve the above object, one aspect of a stator unit according to the present disclosure provides: a stator core that faces a rotor included in a molded motor; a coil that is wound around the stator core; and a molded resin that covers the stator core and the coil, in which the stator core has a rotor facing surface that faces the rotor, and the molded resin covers the rotor facing surface.

One aspect of a molded motor according to the present disclosure provides the stator unit and the rotor that faces the stator core included in the stator unit.

An aspect of a method of manufacturing a stator unit according to the present disclosure provides: a first step of disposing a stator having a stator core and a coil wound around the stator core in a mold; and a second step of molding a molded resin that covers the stator by injecting a liquid resin into the mold and curing the liquid resin, in which in the first step and the second step, the stator core is supported by a pin, and the pin supports a surface of the stator core other than a rotor facing surface.

According to the present disclosure, it is possible to prevent the rotor facing surface of the stator core from being rusted without applying the antirust coating.

### BRIEF DESCRIPTION OF THE DRAWINGS

Fig. 1 is a perspective view of a molded motor according to an exemplary embodiment as viewed obliquely from above.
Fig. 2 is a perspective view of the molded motor according to the exemplary embodiment as viewed obliquely from below.
Fig. 3 is a cross-sectional view of the molded motor according to the exemplary embodiment taken along a plane parallel to a direction in which a shaft center of a rotating shaft extends.
Fig. 4 is a cross-sectional view of the molded motor according to the exemplary embodiment taken along a IV-IV line in Fig. 3.
Fig. 5 is a plan view of a steel sheet in a stator core according to the exemplary embodiment.
Fig. 6A is a view illustrating a method of manufacturing a stator unit according to the exemplary embodiment.
Fig. 6B is a view illustrating the method of manufacturing the stator unit according to the exemplary embodiment.
Fig. 7 is a view illustrating a method of manufacturing a stator unit according to a first modification.
Fig. 8 is a view illustrating a method of manufacturing a stator unit according to a second modification.
Fig. 9 is a view illustrating a method of manufacturing a stator unit according to a third modification.
Fig. 10 is a view illustrating a method of manufacturing a stator unit according to a fourth modification.
Fig. 11 is a view illustrating a method of manufacturing a stator unit according to a fifth modification.

### DESCRIPTION OF EMBODIMENT

Hereinafter, exemplary embodiments of the present disclosure will be described with reference to the drawings. Note that, each of the exemplary embodiments described below illustrates one specific example of the present disclosure. Therefore, numerical values, constituent elements, arrangement positions and connection modes of the constituent elements, steps, order of the steps, and the like shown in the following exemplary embodiments are merely examples, and are not intended to limit the present disclosure. Therefore, among the constituent elements in the following exemplary embodiments, the constituent elements that are not described in independent claims indicating the highest-order concept of the present disclosure are described as optional constituent elements.

Note that, each drawing is a schematic diagram, and is not necessarily strictly illustrated. Further, in all the drawings, substantially the same components are denoted by the same reference numerals, and redundant description will be omitted or simplified. Further, in the present description, the terms "upper" and "lower" do not necessarily refer to an upward direction (vertically upward) and a downward direction (vertically downward) in terms of absolute space recognition.

### (Exemplary embodiment)

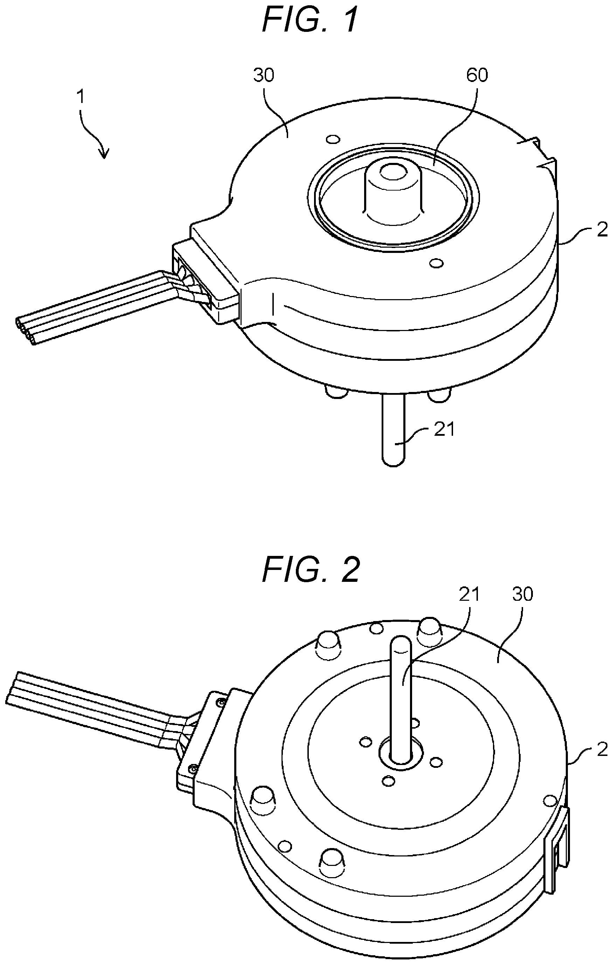

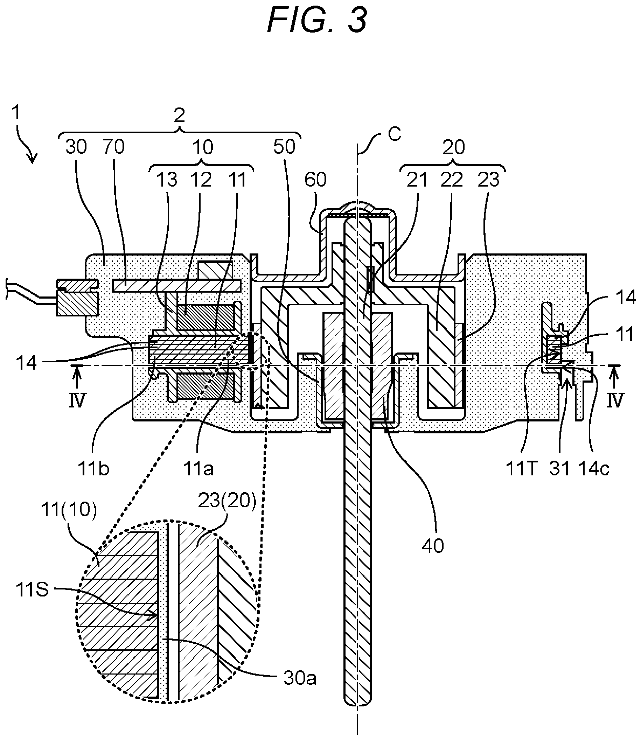

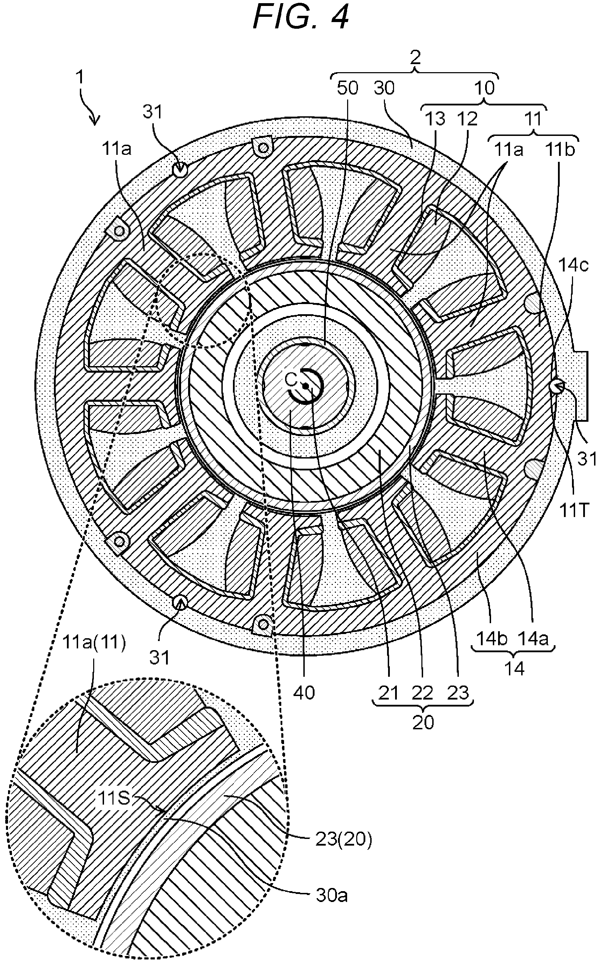

An overall configuration of molded motor 1 according to an exemplary embodiment will be described with reference to Figs. 1 to 4. Fig. 1 is a perspective view of molded motor 1 according to the exemplary embodiment as viewed obliquely from above. Fig. 2 is a perspective view of molded motor 1 as viewed obliquely from below. Fig. 3 is a cross-sectional view of molded motor 1 taken along a plane parallel to a direction in which shaft center C of rotating shaft 21 extends. Fig. 4 is a cross-sectional view of molded motor 1 taken along a IV-IV line in Fig. 3.

As shown in Figs. 1 to 4, molded motor 1 includes stator 10, rotor 20 that rotates by a magnetic force of stator 10, and molded resin 30 that covers stator 10. Molded motor 1 further includes bearing 40, first bracket 50, second bracket 60, and circuit board 70. In molded motor 1, molded resin 30 and second bracket 60 constitute an outer shell of molded motor 1.

Further, in molded motor 1, stator 10, molded resin 30, first bracket 50, and circuit board 70 constitute stator unit 2. In other words, stator unit 2 includes stator 10, molded resin 30, first bracket 50, and circuit board 70.

In the present exemplary embodiment, molded motor 1 is a brushless motor that does not use a brush. Molded motor 1 is an inner rotor type motor in which rotor 20 is disposed inside stator 10.

Molded motor 1 can be used as, for example, a fan motor in a blower. In particular, as shown in Figs. 1 and 2, since molded motor 1 is entirely covered with molded resin 30, it is useful for an electric equipment used in a humid environment. As an example, when molded motor 1 is used for a blower, the blower can be used for an electric equipment such as a refrigerator or an air conditioner. In the present exemplary embodiment, molded motor 1 is a fan motor mounted on a blower (a fan inside a refrigerator) for cold air circulation in a refrigerator.

Hereinafter, each component of molded motor 1 will be described in detail with reference to Figs. 3 and 4.

As shown in Figs. 3 and 4, stator 10 (a stator) faces rotor 20. Specifically, stator 10 is disposed facing rotor 20 with a small air gap interposed between it and rotor 20. Stator 10 is disposed outside rotor 20 to surround rotor 20. The air gap between stator 10 and rotor 20 is, for example, about 0.3 mm.

Stator 10 generates a magnetic force that acts on rotor 20. Specifically, stator 10 is configured to generate a magnetic flux on an air gap surface with rotor 20.

As shown in Figs. 3 and 4, stator 10 includes stator core 11, coil 12, and insulator 13.

Stator core 11 faces rotor 20. Specifically, stator core 11 is disposed to surround rotor 20. Stator core 11 is disposed to surround rotor yoke 22 and magnet 23 included in rotor 20.

Stator core 11 has a rotor facing surface 11S that is a surface facing rotor 20. In other words, rotor facing surface 11S is an air gap surface of stator 10 to rotor 20. Since molded motor 1 is an inner rotor type motor, rotor facing surface 11S is an inner peripheral surface (an inner surface in a radial direction) of stator core 11.

Stator core 11 is a stator core serving as a core of stator 10, and generates a magnetic force for causing rotor 20 to rotate by energizing coil 12. As shown in Fig. 4, stator core 11 is formed in a ring shape to surround rotor 20.

As shown in Fig. 4, stator core 11 includes a plurality of teeth 11a. Each of the plurality of teeth 11a protrudes toward rotor 20. Specifically, the plurality of teeth 11a are disposed radially, extending in a direction (the radial direction) orthogonal to shaft center C of rotating shaft 21, respectively. The plurality of teeth 11a are provided at equal intervals while forming slots between two adjacent teeth 11a in a rotation direction (a circumferential direction) of rotating shaft 21. A front end part of each tooth 11a is a core inner diameter portion of stator core 11.

Rotor facing surface 11S is a front end surface of tooth 11a. In other words, the each of the plurality of teeth 11a has a front end surface as rotor facing surface 11S. In other words, the front end surface of tooth 1 1a is the air gap surface of stator 10 to rotor 20.

Stator core 11 includes yoke 11b. Each of the plurality of teeth 11a protrudes from yoke 11b toward rotor 20. Each of the plurality of teeth 11a faces rotor yoke 22 included in rotor 20. Yoke 11b is formed in an annular shape to surround rotor 20. Yoke 11b is a back yoke formed outside each tooth 11a.

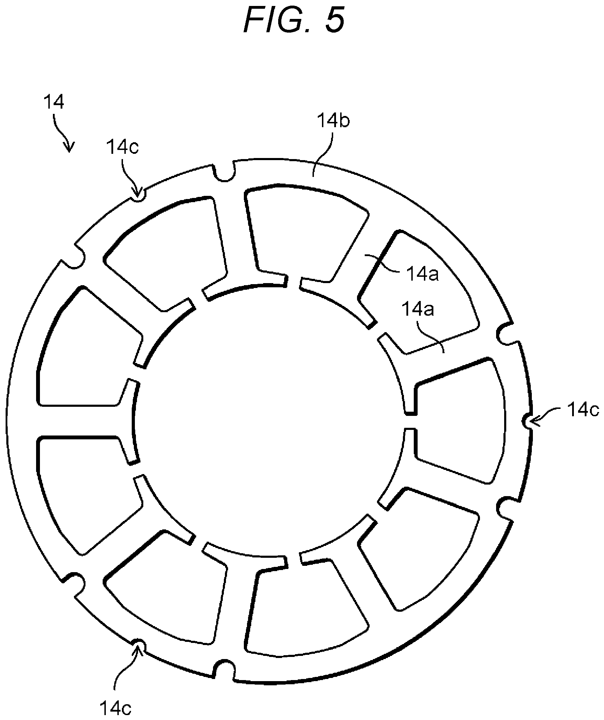

Stator core 11 includes a plurality of steel sheets 14 laminated in the direction of shaft center C of rotating shaft 21. Each of the plurality of steel sheets 14 is, for example, an electromagnetic steel sheet blanked into a predetermined shape. As steel sheet 14 constituting stator core 11, for example, a blanked electromagnetic steel sheet having a shape shown in Fig. 5 is used. Fig. 5 is a plan view of steel sheet 14 in stator core 11 according to the exemplary embodiment. Stator core 11 is a laminate in which a plurality of steel sheets 14 shown in Fig. 5 are laminated.

As shown in Fig. 5, each steel sheet 14 includes a plurality of tooth portions 14a corresponding to the plurality of teeth 1 1a of stator core 11, and yoke portion 14b corresponding to yoke 11b of stator core 11. The plurality of tooth portions 14a are formed to radially protrude inward from yoke portion 14b having an annular shape. The plurality of steel sheets 14 in stator core 11 all have the same shape. However, the present disclosure is not limited thereto.

Stator core 11 is not limited to a laminate of a plurality of steel sheets 14, and may be a bulk body made of a magnetic material.

Coil 12 shown in Figs. 3 and 4 is an armature winding of stator 10. Coil 12 is wound around stator core 11. Specifically, coil 12 is a wound coil that is wound in a coil shape around each of the plurality of teeth 11a included in stator core 11. Coil 12 is wound around each tooth 11a with insulator 13 interposed therebetween. As an example, coil 12 is a concentrated wound coil that is wound around each tooth 11a. Coil 12 is housed in a slot of stator core 11.

Coil 12 is a three-phase winding so that rotor 20 can rotate as, for example, a three-phase synchronous motor. Specifically, coil 12 includes unit coils of three phases of a U phase, a V phase, and a W phase which have phases electrically different from each other by 120 degrees. In other words, coil 12 wound around each tooth 11a is energized and driven by three-phase alternating current energized in units of phases of the U phase, the V phase, and the W phase. As a result, a main magnetic flux of stator 10 is generated in each tooth 11a of stator core 11. In other words, each tooth 11a is a magnetic pole tooth, and is an electromagnet that generates a magnetic force by energizing coil 12.

An end of coil 12 of each phase is connected by a winding connection portion included in circuit board 70. Specifically, in circuit board 70, pattern wiring electrically connected to coil 12 is formed for each phase of the U phase, the V phase, and the W phase. The end of coil 12 of each phase is bonded to the pattern wiring of circuit board 70 by solder or the like.

Insulator 13 is a coil bobbin. Insulator 13 has a frame body portion with a frame shape around which coil 12 is wound. Specifically, the frame body portion of insulator 13 is formed to cover each tooth 11a included in stator core 11. Insulator 13 is, for example, a resin molded article made of an insulating resin material such as polybutylene terephthalate (PBT).

Stator 10 configured as described above generates a magnetic force acting on rotor 20 by a current flowing through coil 12. Specifically, stator 10 generates a magnetic flux on an air gap surface with rotor yoke 22 included in rotor 20 so that N poles and S poles are alternately present along the rotation direction (the circumferential direction) of rotating shaft 21. In the present exemplary embodiment, a direction of the main magnetic flux generated by stator 10 is the direction (the radial direction) orthogonal to shaft center C of rotating shaft 21.

As shown in Figs. 3 and 4, rotor 20 (a rotor) is disposed facing stator 10. Rotor 20 faces stator 10 in the direction (the radial direction) orthogonal to the direction of shaft center C of rotating shaft 21. As described above, rotor 20 is disposed with the air gap interposed between it and stator 10. Rotor 20 rotates by a magnetic force generated in stator 10.

Rotor 20 has a configuration in which N poles and S poles that generate a magnetic flux are alternately and repeatedly present over the circumferential direction. As a result, rotor 20 generates a magnetic force acting on stator 10. The direction of the magnetic flux generated by rotor 20 is the direction orthogonal to the direction of shaft center C (a shaft center direction) of rotating shaft 21. In other words, the direction of the magnetic flux generated by rotor 20 is the radial direction (a radial direction).

Rotor 20 includes rotating shaft 21, rotor yoke 22, and magnet 23.

Rotating shaft 21 is a shaft having shaft center C. Rotating shaft 21 is an elongated rod-like member such as a metal rod. Shaft center C of rotating shaft 21 is a center when rotor 20 rotates. A longitudinal direction (an extending direction) of rotating shaft 21 is the direction of shaft center C (the shaft center direction).

As shown in Fig. 3, rotating shaft 21 is fixed to rotor yoke 22. Specifically, rotating shaft 21 is inserted into a through hole provided at the center of rotor yoke 22 and fixed to rotor yoke 22 to extend on both sides of rotor yoke 22 in the direction in which shaft center C extends. Rotating shaft 21 is fixed to rotor yoke 22, for example, by being press fitted or shrink fitted into the through hole of rotor yoke 22.

Rotating shaft 21 is held by bearing 40. Bearing 40 is a bearing that rotatably supports rotating shaft 21. Bearing 40 is fixed to first bracket 50. First bracket 50 is a cup-shaped metal member having a flange portion. Second bracket 60 is disposed on an opposite side of first bracket 50. Second bracket 60 is a cup-shaped metal member having a flange portion that has a diameter larger than the diameter of the flange portion of first bracket 50. First bracket 50 and second bracket 60 are fixed to molded resin 30. Specifically, first bracket 50 is fixed to be partially embedded in molded resin 30. Second bracket 60 is fixed to be fitted into an opening of molded resin 30.

A portion on one side of rotating shaft 21 protrudes from first bracket 50. In other words, rotating shaft 21 penetrates first bracket 50. A first portion of rotating shaft 21 is a portion (an output shaft) on an output side of rotating shaft 21. Therefore, a load driven by molded motor 1 is attached to the first portion of rotating shaft 21 protruding from first bracket 50. For example, when molded motor 1 is used as a fan motor, a rotary fan is attached as a load to the first portion of rotating shaft 21.

On the other hand, a second portion on the other side of rotating shaft 21 does not protrude from second bracket 60. In other words, the second portion of rotating shaft 21 is a portion (an opposite output shaft) on the opposite output side of rotating shaft 21.

Rotor yoke 22 is a cup-shaped magnetic member made of a magnetic material. Specifically, rotor yoke 22 is formed in a bottomed cylindrical shape. Rotor yoke 22 is disposed such that the bottom thereof is positioned on a side of second bracket 60. The through hole through which rotating shaft 21 is inserted is provided at the center of the bottom of rotor yoke 22.

Magnet 23 is fixed to rotor yoke 22. Magnet 23 faces stator core 11 included in stator 10. Rotor 20 is a surface permanent magnetic (SPM) type. Therefore, magnet 23 directly faces stator core 11 included in stator 10 with the air gap interposed therebetween. Therefore, an outer surface of magnet 23 is an exposed surface and is the outer surface of rotor 20. As described above, the surface of magnet 23 facing stator 10 (the outer surface in the radial direction) is an air gap surface of rotor 20 to stator 10.

Magnet 23 is, for example, a permanent magnet made of a sintered magnet. Magnet 23 is configured such that N poles and S poles are alternately and repeatedly present along the circumferential direction. In the present exemplary embodiment, magnet 23 is disposed such that the direction of the magnetic pole is the direction (the radial direction) orthogonal to the direction (a Z-axis direction) of shaft center C of rotating shaft 21. In other words, magnet 23 is magnetized such that the direction of the magnetic pole is the radial direction.

Magnet 23 may include a plurality of permanent magnets. In this case, the plurality of permanent magnets is annularly disposed along the circumferential direction of rotor yoke 22. Two permanent magnets adjacent to each other are disposed with the directions of the magnetic poles of the S pole and the N pole being opposite to each other.

Molded resin 30 covers stator 10. In other words, molded resin 30 covers stator core 11 and coil 12. Molded resin 30 covers a whole stator 10. Specifically, molded resin 30 covers stator core 11, coil 12, and insulator 13 such that stator core 11, coil 12, and insulator 13 are not visible from the outside.

Molded resin 30 covers rotor facing surface 11S of stator core 11. Rotor facing surface 11S is a front end surface of tooth 11a. Therefore, molded resin 30 covers the front end surface of tooth 11a. A film thickness of molded resin 30 in a part covering the front end surface of tooth 11a is thin. In other words, molded resin 30 has a thin resin film 30a covering the front end surface of tooth 1 1a as rotor facing surface 11S. The film thickness of resin film 30a is, as an example, less than or equal to 1 mm, and preferably less than or equal to 0.1 mm. In the present exemplary embodiment, resin film 30a has a thickness of 0.05 mm. As described above, by reducing the thickness of resin film 30a that covers the front end surface of tooth 1 1a, it is possible to suppress an increase in a distance between tooth 11a constituting a magnetic circuit and magnet 23 of rotor 20. Therefore, a loss of magnetic force can be suppressed. By setting the film thickness of resin film 30a to less than or equal to 0.1 mm, the loss of magnetic force can be suppressed.

For all teeth 11a, molded resin 30 covers the whole teeth 11a such that teeth 11a are completely invisible. In other words, in all teeth 11a, all of the parts exposed when there is no molded resin 30 is covered with molded resin 30. Therefore, an entire surface of teeth 11a is not exposed. The slot is also filled with molded resin 30 between the two adjacent teeth 11a.

Molded resin 30 also covers circuit board 70. Molded resin 30 covers the whole circuit board 70 such that circuit board 70 is also invisible. A part of a lead bush mounted on circuit board 70 is exposed from molded resin 30. A lead wire to be connected to an external power supply is drawn out from the lead bush.

Molded resin 30 is made of an insulating resin material having excellent thermal conductivity, such as a polyester resin or an epoxy resin. Molded resin 30 is made of a thermosetting resin. For example, unsaturated polyester that is a thermosetting resin can be used as the resin material of molded resin 30.

Molded resin 30 constitutes an outer shell of molded motor 1 and stator unit 2. Therefore, molded resin 30 is a housing that encloses rotor 20. Specifically, molded resin 30 has a main body with a low-height cylindrical shape that surrounds rotor 20 and covers stator 10 over the whole circumferential direction. The main body of molded resin 30 is a body of molded motor 1.

As shown in Figs. 3 and 4, pin holes 31 into which a pin for supporting stator core 11 is inserted when molded resin 30 is molded are formed in molded resin 30. Therefore, pin hole 31 allows the pin for supporting stator core 11 to be inserted when molded resin 30 is molded.

During molding of molded resin 30, the pin for supporting stator core 11 is in contact with the surface of stator core 11. Therefore, the surface of stator core 11 includes pin hole surface 11T serving as an inner surface of pin hole 31. Pin hole 31 is formed to be recessed from the outer surface of molded resin 30 to the surface of stator core 11. Pin hole 31 is formed to extend in the direction of shaft center C of rotating shaft 21 from an outer surface on the side of first bracket 50 among outer surfaces of molded resin 30 in the direction of shaft center C of rotating shaft 21. Pin hole 31 is connected to a side surface of stator core 11 near the bottom. In other words, since pin hole 31 is formed, a part of the surface of stator core 11 is exposed. Therefore, pin hole surface 11T in stator core 11 is an exposed surface.

The surface of stator core 11 is exposed from molded resin 30 only in pin hole 31. In other words, only pin hole surface 11T of the entire surface of stator core 11 is exposed from molded resin 30. Therefore, stator core 11 is covered with molded resin 30 except for the part exposed from pin hole 31.

Pin hole surface 11T in stator core 11 is a surface other than rotor facing surface 11S in stator core 11. Rotor facing surface 11S is the inner peripheral surface of stator core 11. Therefore, pin hole surface 11T is a surface other than the inner peripheral surface of stator core 11.

Specifically, pin hole surface 11T is an outer surface of stator core 11 in the direction (the radial direction) orthogonal to the direction of shaft center C of rotating shaft 21 of rotor 20. In other words, pin hole surface 11T is an outer surface on a side (that is, a side surface) in stator core 11. In this case, pin hole surface 11T may be a part of the outer surface on the side of stator core 11 instead of the entire outer surface on the side of stator core 11. In other words, the entire outer surface on the side of stator core 11 is not exposed, and only a part of the outer surface on the side of stator core 11 is preferably exposed.

As shown in Figs. 4 and 5, pin hole surface 11T of stator core 11 is formed to be recessed in the radial direction from a surface on the side of stator core 11. Specifically, cutout portion 14c is formed at an outer peripheral end portion of steel sheet 14. Therefore, cutout portion 14c is a part of pin hole 31. Therefore, pin hole surface 11T of stator core 11 is a side end surface of cutout portion 14c formed in steel sheet 14.

Cutout portions 14c are formed at a plurality of locations of yoke portion 14b in steel sheet 14. Specifically, three cutout portions 14c are provided in steel sheet 14 at equal intervals along the circumferential direction. Therefore, three pin holes 31 are formed in molded resin 30. In other words, pin hole surfaces 11T are also present at three locations of stator core 11.

A pin that supports stator core 11 when molded resin 30 is molded is fitted to cutout portion 14c of steel sheet 14. Therefore, the shape of cutout portion 14c is a shape corresponding to an outer shape of the pin that supports stator core 11. As an example, since the outer shape of the pin that supports stator core 11 is circular, the shape of cutout portion 14c is a shape including an arc.

A plurality of circuit components for converting power supplied from an external power supply into drive power to be supplied to coil 12 are mounted on circuit board 70 covered with molded resin 30. Specifically, the plurality of circuit components mounted on circuit board 70 constitutes a drive circuit that generates drive power corresponding to each phase of the U phase, the V phase, and the W phase of coil 12. Therefore, circuit board 70 is electrically connected to coil 12. Specifically, circuit components mounted on circuit board 70 and coil 12 are electrically connected.

In molded motor 1 configured as described above, when power is supplied from circuit board 70 to coil 12 included in stator 10, a field current flows through coil 12, and a magnetic flux is generated in stator core 11. In other words, a magnetic flux directed from stator 10 to rotor 20 is generated. On the other hand, in rotor 20, a magnetic flux toward stator 10 is generated by magnet 23. Then, the magnetic force generated by an interaction between the magnetic flux generated by stator core 11 and the magnetic flux generated by rotor 20 becomes a torque that causes rotor 20 to rotate, and rotor 20 rotates.

As described above, stator unit 2 of the present exemplary embodiment includes stator core 11, coil 12, and molded resin 30. Stator core 11 faces rotor 20 included in molded motor 1. Coil 12 is wound around stator core 11. Molded resin 30 covers stator core 11 and coil 12. Furthermore, stator core 11 has rotor facing surface 11S that faces rotor 20, and molded resin 30 covers rotor facing surface 11S.

As a result, it is possible to prevent rotor facing surface 11S of stator core 11 from being rusted without applying the antirust coating.

Preferably, stator core 11 is disposed to surround rotor 20, and rotor facing surface 11S is the inner peripheral surface of stator core 11.

A part of the surface of stator core 11 is preferably exposed.

Preferably, stator core 11 has a plurality of teeth 11a protruding toward rotor 20, and each of the plurality of teeth 11a has a front end surface as rotor facing surface 11S.

Molded motor 1 of the present exemplary embodiment includes stator unit 2 described above, and rotor 20 that faces stator core 11 included in stator unit 2.

As a result, it is possible to prevent the rotor facing surface of the stator core from being rusted without applying the antirust coating.

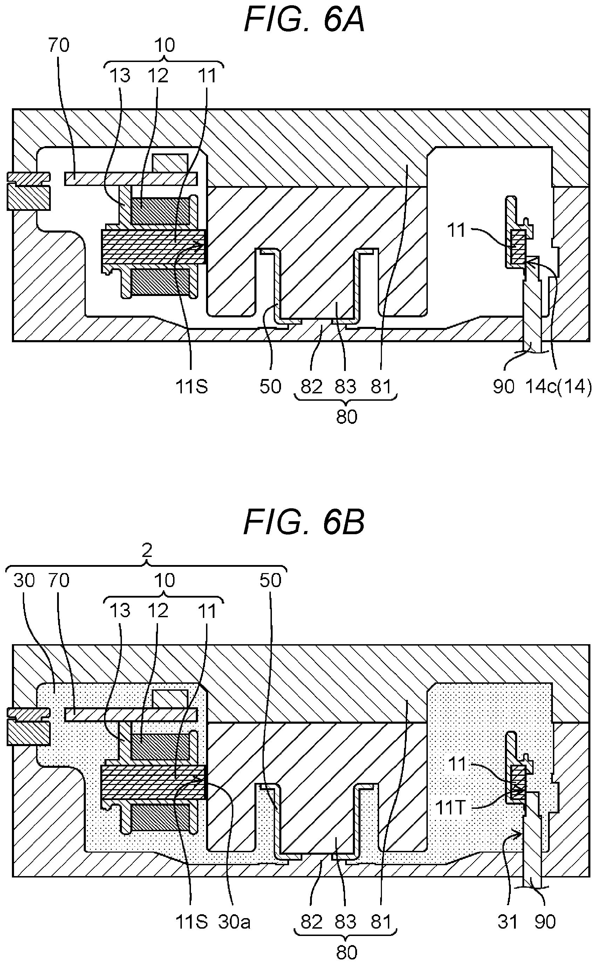

Next, a method of manufacturing stator unit 2 according to the present exemplary embodiment will be described with reference to Figs. 6A and 6B. Fig. 6A is a view illustrating the method of manufacturing stator unit 2 according to the exemplary embodiment. Fig. 6B is a view illustrating the method of manufacturing stator unit 2 according to the exemplary embodiment.

To start with, as shown in Fig. 6A, stator 10 having stator core 11 and coil 12 wound around stator core 11 is disposed in mold 80 (a first step: stator disposing step).

Specifically, stator 10 having stator core 11 around which coil 12 is wound with insulator 13 interposed therebetween, first bracket 50, and circuit board 70 on which circuit components are mounted and has been connected with coil 12, are disposed in mold 80 of an injection molding machine.

Mold 80 includes a plurality of blocks. The injection molding machine in the present exemplary embodiment is a vertical type. Therefore, mold 80 is configured to open and close in a longitudinal direction. For example, mold 80 includes upper mold 81 that is a first mold, lower mold 82 that is a second mold, and central mold 83 that is a third mold. Note that, in the present exemplary embodiment, mold 80 will be described using a three-divided mold. Mold 80 is not limited to be divided into three, and may be divided into two or four or more.

In this step, stator core 11 is supported by pin 90. Pin 90 support a surfaces other than rotor facing surface 11S in stator core 11. In other words, pin 90 support a surface other than the inner peripheral surface of stator core 11. Pin 90 support the outer surface on the side (that is, the side surface) of stator core 11. As described above, pin 90 is brought into contact with stator core 11 to position stator core 11.

Pin 90 is a pin back pin and can be moved in a vertical direction. Specifically, by raising pin 90, pin 90 is inserted from the outside to the inside of mold 80, pin 90 is brought into contact with the surface of stator core 11 to support stator core 11, and to position stator core 11.

At this time, in the present exemplary embodiment, positioning of stator core 11 is performed by fitting pin 90 into cutout portion 14c (see Fig. 5) of steel sheet 14. As a result, positioning of stator core 11 in the rotation direction can be performed. Note that, when the position of pin 90 is determined using steel sheet 14 in which cutout portion 14c is not formed, it is possible to suppress deviation of rotating shaft 21 in the direction of shaft center C.

Next, as shown in Fig. 6B, molded resin 30 that covers stator 10 is molded by injecting a liquid resin into mold 80 and curing the liquid resin (a second step: molded resin molding step).

Specifically, a liquid resin is injected into mold 80 through a gate (not illustrated) provided in mold 80 as a resin injection portion, and the liquid resin is filled inside mold 80. Thereafter, molded resin 30 is molded into a predetermined shape by curing the liquid resin. In the present exemplary embodiment, since a thermosetting resin is used as the liquid resin, the liquid resin is cured by heating the liquid resin. As described above, by curing the liquid resin, stator 10 and first bracket 50 are integrally fixed by molded resin 30. Note that, also in this step, stator core 11 remains supported by pin 90 as in the step of Fig. 6A.

In the present exemplary embodiment, molded resin 30 covers rotor facing surface 11S in stator core 11. In other words, the inner peripheral surface of stator core 11 is covered with resin film 30a.

Thereafter, although not illustrated, pin 90 is lowered vertically downward and discharged to the outside of mold 80. As a result, pin hole 31 is formed in the part of molded resin 30 where pin 90 existed. Therefore, the shape of pin hole 31 corresponds to the shape of pin 90.

In the present exemplary embodiment, pin 90 is discharged along the direction of shaft center C of rotating shaft 21. As a result, pin hole 31 is formed to extend in the direction of shaft center C of rotating shaft 21. Specifically, pin hole 31 is formed to extend vertically upward from the outer surface on a lower side that is the side of first bracket 50. In other words, pin hole 31 extends in the longitudinal direction.

In this manner, stator unit 2 in which the whole stator 10 is covered with molded resin 30 can be manufactured. Thereafter, molded motor 1 is completed by assembling other components such as rotor 20 to stator unit 2.

As described above, according to stator unit 2 of the present exemplary embodiment, molded resin 30 covering stator core 11 and coil 12 covers rotor facing surface 11S in stator core 11. Specifically, rotor facing surface 11S is covered with resin film 30a in molded resin 30.

With this configuration, since rotor facing surface 11S, being a metal surface, is not exposed to the outside (an air layer), it is possible to prevent rotor facing surface 11S from being rusted. In other words, a rust risk due to metal exposure can be reduced. As a result, it is possible to suppress an adverse effect on the rotation operation of rotor 20 due to formation of rust on rotor facing surface 11S.

As described above, according to stator unit 2 of the present exemplary embodiment, it is possible to prevent rotor facing surface 11S of stator core 11 from being rusted without applying the antirust coating.

Therefore, by using stator unit 2 according to the present exemplary embodiment, molded motor 1 having excellent water resistance can be achieved without applying the antirust coating to stator core 11. In other words, it is possible to realize molded motor 1 having a highly reliable water-resistant structure at low cost. For example, molded motor 1 according to the present exemplary embodiment is useful as a fan motor used in the high-humidity environment. In particular, in a case where molded motor 1 is used in a low-temperature environment such as a refrigerator, it is more useful because a higher-humidity environment is promoted.

Furthermore, in the present exemplary embodiment, the whole teeth 11a including rotor facing surface 11S is completely covered with molded resin 30. Therefore, it is possible to suppress generation of resin waste and to suppress generation of abnormal noise.

In other words, when only rotor facing surface 11S of the surfaces of teeth 1 1a is exposed, a cut of molded resin 30 exists at a tip part of tooth 11a. As a result, resin waste is likely to be generated at the tip part of tooth 1 1a, or abnormal noise is likely to be generated. In this case, when resin waste is generated at the tip part of tooth 11a, the resin waste may adversely affect the rotational operation of rotor 20. For example, the resin waste may get stuck in the air gap between tooth 11a and rotor 20, causing rotor 20 to stop rotating at a predetermined speed, or causing rotor 20 to stop rotating. On the other hand, by completely covering the whole teeth 11a including rotor facing surface 11S with molded resin 30, there is no cut of molded resin 30 at the tip part of tooth 11a. As a result, the generation of resin waste due to molded resin 30 can be suppressed. Further, the generation of abnormal noise can be suppressed.

Further, in stator unit 2 according to the present exemplary embodiment, pin hole 31 into which pin 90 for supporting stator core 11 when molded resin 30 is molded can be inserted is formed in molded resin 30. The surface of stator core 11 includes a pin hole surface 11T that serves as the inner surface of pin hole 31. Pin hole surface 11T is a surface other than the inner peripheral surface in stator core 11. Specifically, pin hole surface 11T is the outer surface of stator core 11 in the direction orthogonal to the direction of shaft center C of rotating shaft 21. In other words, pin hole surface 11T is the outer surface on the side in stator core 11.

When pin hole 31 is formed in molded resin 30, the outer surface of stator core 11 is exposed on pin hole surface 11T. Therefore, stator core 11 may be rusted on pin hole surface 11T.

However, as described above, by setting pin hole surface 11T as the outer surface on the side of stator core 11 instead of the inner peripheral surface of stator core 11 that is rotor facing surface 11S, rotor facing surface 11S that is not exposed does not get rusted, and only the exposed pin hole surface 11T is rusted.

In this case, even when the outer surface on the side of stator core 11 is rusted, the rust is not so much as to affect rotation of rotor 20, and does not significantly affect the magnetic force generated by stator 10. Therefore, by setting pin hole surface 11T as the outer surface on the side of stator core 11, it is possible to realize molded motor 1 with high reliability without greatly deteriorating motor performance.

Furthermore, even when pin hole surface 11T is the outer surface on the side in stator core 11, as in the present exemplary embodiment, pin hole surface 11T is preferably a part of the outer surface on the side of stator core 11 instead of the entire outer surface on the side of stator core 11.

With this configuration, the entire outer surface on the side of stator core 11 is not exposed, and only a part of the outer surface on the side of stator core 11 is exposed. In other words, as much as possible of the outer surface on the side of stator core 11 is covered with molded resin 30, and the exposed surface of the outer surface on the side of stator core 11 is reduced as much as possible. As a result, even when stator core 11 is rusted from pin hole surface 11T that serves as the exposed surface, the degree of rust can be alleviated. For example, an amount of rust can be reduced or the time until being rusted can be increased.

For example, in Fig. 3, a length of pin hole surface 11T that is the exposed surface of stator core 11 (the length in the direction of shaft center C of rotating shaft 21) is preferably less than or equal to half of the length of the outer surface on the side of stator core 11, more preferably less than or equal to 1/3 of the length of the outer surface on the side of stator core 11, and further preferably less than or equal to 1/4 of the length of the outer surface on the side of stator core 11, and may be any length as long as stator core 11 can be supported by pin 90. In the present exemplary embodiment, the length of pin hole surface 11T that is the exposed surface of stator core 11 is 2 mm from the outer surface (a lower surface in Fig. 3) of stator core 11 in the direction of shaft center C of rotating shaft 21.

In the present exemplary embodiment, pin hole surface 11T, being a part of the inner surface of pin hole 31 of molded resin 30, is not an outer peripheral surface of molded resin 30. Therefore, the outer peripheral surface of molded resin 30 that forms the outer shell of stator unit 2 is completely sealed with resin. In other words, an inner peripheral surface and an outer peripheral surface of stator unit 2 are both completely covered with molded resin 30. As a result, it is possible to realize molded motor 1 having excellent water resistance even when pin holes 31 are formed in molded resin 30.

The method of manufacturing stator unit 2 according to the present exemplary embodiment includes a first step of disposing stator 10 having stator core 11 and coil 12 wound around stator core 11 in mold 80, and a second step of molding molded resin 30 that covers stator 10 by injecting a liquid resin into mold 80 and curing the liquid resin. In the first step and the second step, stator core 11 is supported by pin 90. Pin 90 support a surfaces other than rotor facing surface 11S in stator core 11.

As a result, since rotor facing surface 11S is not supported by pin 90, stator core 11 can be covered with molded resin 30 without making rotor facing surface 11S an exposed surface. Therefore, it is possible to prevent rotor facing surface 11S of stator core 11 from being rusted without applying the antirust coating.

### (Modifications)

As described above, the technology of the present disclosure has been described above based on the exemplary embodiments, but the present disclosure is not limited to the exemplary embodiments.

For example, in the exemplary embodiment described above, when stator unit 2 is manufactured, pin 90 is raised and inserted into mold 80, and stator core 11 is supported with pin 90. However, the present disclosure is not limited thereto.

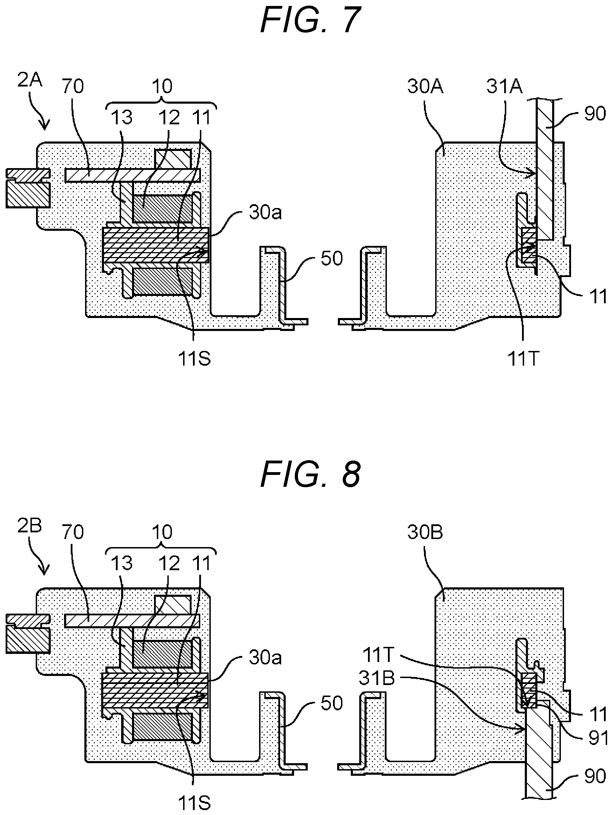

Specifically, as in stator unit 2A shown in Fig. 7, pin 90 may be lowered and inserted into mold 80, and stator core 11 may be supported with pin 90. Fig. 7 is a view illustrating a method of manufacturing stator unit 2A according to a first modification. Fig. 7 is a view corresponding to Fig. 6B, but mold 80 is omitted in Fig. 7.

As shown in Fig. 7, also in the present modification, as in the exemplary embodiment described above, pin 90 supports the outer surface of stator core 11 in the direction orthogonal to the direction of shaft center C of rotating shaft 21. In other words, pin 90 supports the outer surface on the side of stator core 11. Also in the present modification, as in the exemplary embodiment described above, pin 90 is discharged from mold 80 along the direction of shaft center C of rotating shaft 21. As a result, pin hole 31A formed in molded resin 30A extends in the direction of shaft center C of rotating shaft 21. In other words, pin hole 31A extends in the longitudinal direction.

However, in the present modification, pin 90 is raised vertically upward and discharged from mold 80. As a result, pin hole 31A in the present modification is formed to extend vertically downward from the outer surface on an upper side that is opposite to the side of first bracket 50. Also in the present modification, effects similar to those of the exemplary embodiment described above are obtained.

In the exemplary embodiment described above, when stator unit 2 is manufactured, pin 90 is in contact with only the outer surface on the side of stator core 11. However, the present disclosure is not limited thereto. In other words, pin 90 was in contact with one surface of stator core 11 to determine the position of stator core 11. However, pin 90 may come in contact with a plurality of different surfaces in stator core 11 to determine the position of stator core 11.

For example, as in stator unit 2B shown in Fig. 8, by fitting step 91 of pin 90 to an outer corner of stator core 11 using a stepped pin provided with step 91 at a tip portion as pin 90, pin 90 may be brought into contact with both the outer surface on the side and the outer surface on a lower side of stator core 11. Fig. 8 is a view illustrating a method of manufacturing stator unit 2B according to a second modification. Fig. 8 is also a view corresponding to Fig. 6B. However, also in Fig. 8, mold 80 is omitted.

As shown in Fig. 8, stator core 11 is supported by step 91 of pin 90. Pin 90 is in contact with both the outer surface on the side and the outer surface in the vertical direction in stator core 11. Therefore, pin hole surface 11T of stator core 11 includes the outer surface of stator core 11 in the direction orthogonal to the direction of shaft center C of rotating shaft 21 and the outer surface of stator core in the direction of shaft center C of rotating shaft 21. In other words, pin hole surface 11T of stator core 11 includes both the outer surface on the side and the outer surface in the vertical direction in stator core 11. Specifically, pin 90 is in contact with both a part of the outer surface on the side and a part of the outer surface on the lower side in stator core 11. Also in the present modification, effects similar to those of the exemplary embodiment described above are obtained.

In the present modification, as in the exemplary embodiment described above, pin 90 is lowered vertically downward and discharged from mold 80. As a result, pin hole 31B formed in molded resin 30B is formed to extend vertically upward from the outer surface on the lower side that is the side of first bracket 50.

As described above, in the present modification, pin 90 not only supports the outer surface on the side of stator core 11, but also supports the outer surface on the lower side of stator core 11. In other words, pin 90 supports two surfaces which are an outer peripheral surface and the lower surface of stator core 11. As a result, stator core 11 can be stably supported when stator 10 is disposed in mold 80. Further, stator core 11 can be accurately positioned.

In the present modification, pin 90 is in contact with both the outer surface on the side and the outer surface in the vertical direction in stator core 11. However, the present disclosure is not limited thereto. For example, pin 90 on which step 91 is not formed may be used to support stator core 11 to be pushed up by bringing pin 90 into contact with only the outer surface in the vertical direction in stator core 11. In other words, pin 90 may support the outer surface of stator core 11 in the vertical direction.

In the exemplary embodiment described above, pin 90 is moved in the vertical direction. However, the present disclosure is not limited thereto.

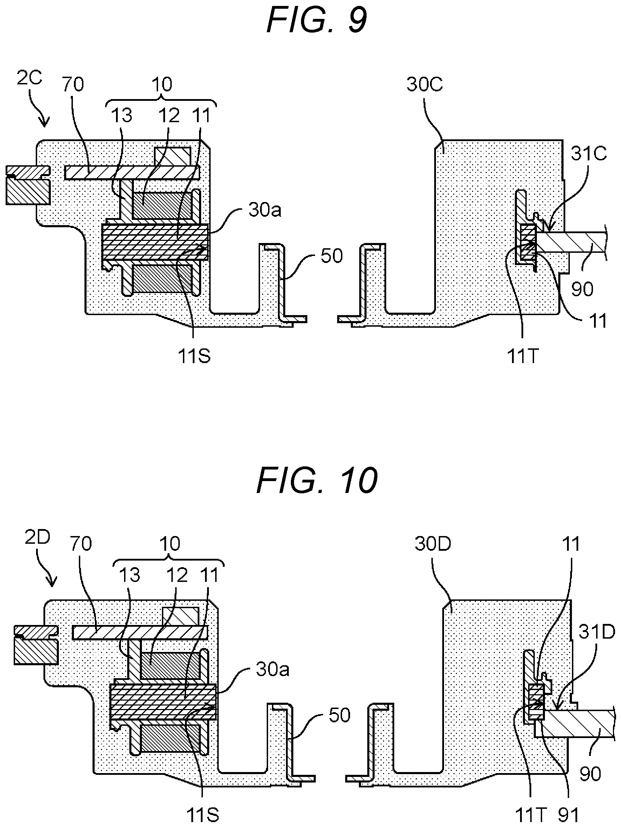

Specifically, as in stator unit 2C shown in Fig. 9, pin 90 may be moved in a horizontal direction and inserted into mold 80, and stator core 11 may be supported with pin 90. In other words, stator core 11 may be positioned not from the direction of shaft center C of rotating shaft 21 but from the direction (the radial direction) orthogonal to shaft center C of rotating shaft 21. Fig. 9 is a view illustrating a method of manufacturing stator unit 2C according to a third modification. Fig. 9 is also a view corresponding to Fig. 6B. However, also in Fig. 9, mold 80 is omitted.

As shown in Fig. 9, also in the present modification, as in the exemplary embodiment described above, pin 90 supports the outer surface of stator core 11 in the direction orthogonal to the direction of shaft center C of rotating shaft 21. In other words, pin 90 supports the outer surface on the side of stator core 11.

However, in the present modification, pin 90 is discharged from mold 80 along the direction (the horizontal direction in Fig. 9) orthogonal to the direction of shaft center C of rotating shaft 21. As a result, pin hole 31C formed in molded resin 30C extends in the direction orthogonal to the direction of shaft center C of rotating shaft 21. In other words, pin hole 31C extends in a lateral direction. Also in the present modification, effects similar to those of the exemplary embodiment described above are obtained.

In the third modification shown in Fig. 9, pin 90 is in contact with only the outer surface on the side of stator core 11. However, the present disclosure is not limited thereto.

Specifically, as in stator unit 2D shown in Fig. 10, pin 90 may be brought into contact with both the outer surface on the side and the outer surface on the lower side of stator core 11 by fitting step 91 of pin 90 to the outer corner of stator core 11 using a pin back pin provided with step 91 at the tip portion as pin 90. Fig. 10 is a view illustrating a method of manufacturing stator unit 2D according to a fourth modification. Fig. 10 is also a view corresponding to Fig. 6B, but mold 80 is omitted in Fig. 10.

As shown in Fig. 10, in the present modification, stator core 11 is supported by step 91 of pin 90 as in the second modification described above. Pin 90 is in contact with both the outer surface on the side and the outer surface in the vertical direction in stator core 11. In other words, pin hole surface 11T of stator core 11 includes both the outer surface on the side and the outer surface in the vertical direction in stator core 11. Also in the present modification, the same effects as those of the exemplary embodiment described above and the second modification described above are obtained.

In the present modification, as in the third modification described above, pin 90 is moved in the horizontal direction and discharged from mold 80. As a result, pin hole 31D formed in molded resin 30D extends in the direction orthogonal to the direction of shaft center C of rotating shaft 21. In other words, pin hole 31D extends in the lateral direction.

In the exemplary embodiment described above, the second modification, and the like, pin 90 is brought into contact with the side surface, an upper surface, or the lower surface of stator core 11. However, the present disclosure is not limited thereto.

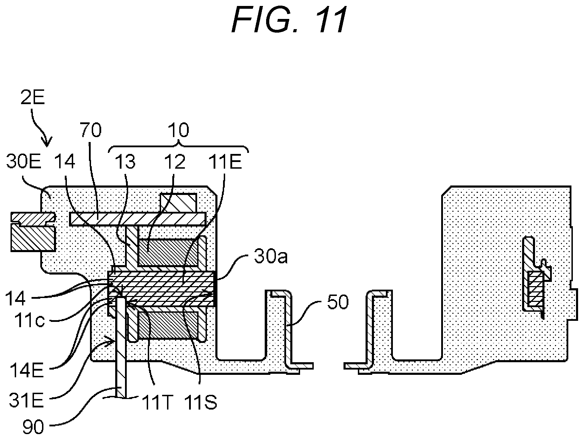

Specifically, as in stator unit 2E shown in Fig. 11, stator core 11E may be supported by inserting pin 90 into core hole 11c formed in stator core 11E. Fig. 11 is a view illustrating a method of manufacturing stator unit 2E according to a fifth modification. Fig. 11 is also a view corresponding to Fig. 6B. However, also in Fig. 11, mold 80 is omitted.

As shown in Fig. 11, core hole 11c included in stator core 11E is formed to be recessed inward from the outer surface of stator core 11E. In this case, core hole 11c can be formed in stator core 11E by laminating one or a plurality of steel sheets 14E in which a through hole corresponding to core hole 11c is formed in addition to steel sheet 14.

In the present modification, pin 90 is inserted into core hole 11c of stator core 11E. As a result, pin 90 is in contact with the inner surface of core hole 11c. Pin hole 31E formed in molded resin 30E by pin 90 communicates with core hole 11c of stator core 11E. Also in the present modification, effects similar to those of the exemplary embodiment described above are obtained.

Moreover, in the present modification, since pin 90 is inserted into core hole 11c of stator core 11E, stator core 11E can be stably supported when stator 10 is disposed in mold 80. Further, stator core 11E can be accurately positioned. By inserting pin 90 into core hole 11c of stator core 11E to form a minimum necessary pressing structure, an area of the exposed surface of stator core 11 can be reduced as much as possible. As a result, it is possible to further prevent stator core 11 from being rusted.

Core hole 11c formed in stator core 11E may be a through hole that penetrates stator core 11E. In the present modification, core hole 11c is formed to be recessed from the upper surface or the lower surface of stator core 11 along the direction of shaft center C of rotating shaft 21. However, it may be formed to be recessed from the side surface of stator core 11 along the direction orthogonal to the direction of shaft center C of rotating shaft 21.

In the exemplary embodiment described above, pin holes 31 formed in molded resin 30 remain hollow. However, the present disclosure is not limited thereto. For example, pin holes 31 may be filled with resin such as putty. In this case, the method of manufacturing stator unit 2 described above further includes, after the second step (the molded resin molding step), a step of filling pin hole 31 formed by removing pin 90 from molded resin 30 with resin.

As described above, by filling pin hole 31 with resin, pin hole surface 11T of stator core 11 is not exposed. As a result, the entire surface of stator core 11 is completely covered with the resin, and the entire surface of stator core 11 is not exposed. Therefore, it is possible not only to prevent stator core 11 from being rusted from rotor facing surface 11S but also to prevent stator core 11 from being rusted from pin hole surface 11T.

In this case, the entire surface of stator core 11 can be prevented from being exposed by a method different from the method of filling pin holes 31 with a filler such as resin. For example, in the second step (the molded resin molding step) of the method of manufacturing stator unit 2, pin 90 is removed from the liquid resin before the liquid resin is cured, so that pin hole 31 into which pin 90 is inserted can be prevented from being formed in molded resin 30. As a result, the entire surface of stator core 11 is completely covered with molded resin 30. Therefore, it is possible to prevent the entire surface of stator core 11 from being exposed.

In stator unit 2 of the exemplary embodiment described above, it is preferable that pin hole 31 into which pin 90 for supporting stator core 11 when molded resin 30 is molded can be inserted is formed in molded resin 30, the surface of stator core 11 includes pin hole surface 11T that serves as the inner surface of pin hole 31, and pin hole surface 11T is a surface other than the inner peripheral surface in stator core 11.

Pin hole surface 11T may be the outer surface of stator core 11 in a direction orthogonal to the shaft center direction of rotating shaft 21 of rotor 20.

Pin hole surface 11T may be the outer surface of stator core 11 in the shaft center direction of rotating shaft 21 of rotor 20.

Pin hole surface 11T may include the outer surface of stator core 11 in the direction orthogonal to the shaft center direction of rotating shaft 21 of rotor 20 and the outer surface of stator core 11 in the shaft center direction of rotating shaft 21 of rotor 20.

Preferably, stator core 11 has core hole 11c that is recessed inward from the outer surface, and pin hole 31 communicates with core hole 11c.

Pin hole 31 is preferably filled with resin.

In the surface of stator core 11, a surface located on the opposite side of rotor facing surface 11S in the direction orthogonal to the shaft center direction of rotating shaft 21 of rotor 20 is preferably exposed.

In the exemplary embodiment described above, rotor 20 is the SPM type, but the present disclosure is not limited thereto. For example, rotor 20 may be an interior permanent magnet (IPM) type in which a plurality of permanent magnets are embedded in the rotor core. In this case, the permanent magnet may be a sintered magnet or a bonded magnet.

The exemplary embodiment described above exemplifies a case where molded motor 1 is used in a refrigerator. However, molded motor 1 according to the present disclosure may be used in a product other than a refrigerator. In this case, molded motor 1 according to the present disclosure is particularly useful for a product that requires water resistance, such as a showcase, an air conditioner, or a dryer.

In addition, the present disclosure also includes embodiments obtained by making various modifications that those skilled in the art can conceive of with respect to the exemplary embodiment and modifications described above, or embodiments realized by arbitrarily combining components and functions in the exemplary embodiment and modifications described above without departing from the gist of the present disclosure.

### INDUSTRIAL APPLICABILITY

The present disclosure can be used for devices in various fields including a fan motor used in a refrigerator or an air conditioner.

### REFERENCE MARKS IN THE DRAWINGS

1: molded motor
2, 2A, 2B, 2C, 2D, 2E: stator unit
10: stator
11, 11E: stator core
11a: tooth
11b: yoke
11c: core hole
11S: rotor facing surface
11T: pin hole surface
12: coil
13: insulator
14, 14E: steel sheet
14a: tooth portion
14b: yoke portion
14c: cutout portion
20: rotor
21: rotating shaft
22: rotor yoke
23: magnet
30, 30A, 30B, 30C, 30D, 30E: molded resin
30a: resin film
31, 31A, 31B, 31C, 31D, 31E: pin hole
40: bearing
50: first bracket
60: second bracket
70: circuit board
80: mold
81: upper mold
82: lower mold
83: central mold
90: pin
91: step

## Claims

1. A stator unit comprising:
a stator core that faces a rotor included in a molded motor;
a coil that is wound around the stator core; and
a molded resin that covers the stator core and the coil, wherein
the stator core has a rotor facing surface that faces the rotor, and
the molded resin covers the rotor facing surface.

2. The stator unit according to claim 1, wherein
the stator core is disposed to surround the rotor, and
the rotor facing surface is an inner peripheral surface of the stator core.

3. The stator unit according to claim 2, wherein
a pin hole into which a pin that supports the stator core is inserted when the molded resin is molded is formed in the molded resin,
a surface of the stator core includes a pin hole surface that serves as an inner surface of the pin hole, and
the pin hole surface is a surface other than the inner peripheral surface of the stator core.

4. The stator unit according to claim 3, wherein
the pin hole surface is an outer surface of the stator core in a direction orthogonal to a shaft center direction of a rotating shaft of the rotor.

5. The stator unit according to claim 3, wherein
the pin hole surface is an outer surface of the stator core in a shaft center direction of a rotating shaft of the rotor.

6. The stator unit according to claim 3, wherein
the pin hole surface includes an outer surface of the stator core in a direction orthogonal to a shaft center direction of a rotating shaft of the rotor and an outer surface of the stator core in the shaft center direction of the rotating shaft of the rotor.

7. The stator unit according to claim 3, wherein
the stator core has a core hole that is recessed inward from an outer surface, and
the pin hole communicates with the core hole.

8. The stator unit according to any one of claims 3 to 7, wherein
the pin hole is filled with resin.

9. The stator unit according to claim 1 or 2, wherein
a part of a surface of the stator core is exposed.

10. The stator unit according to claim 9, wherein
in the surface of the stator core, a surface located on an opposite side of the rotor facing surface in a direction orthogonal to a shaft center direction of a rotating shaft of the rotor is exposed.

11. The stator unit according to any one of claims 1 to 10, wherein
the stator core includes a plurality of teeth that protrude toward the rotor, and each of the plurality of teeth has a front end surface as the rotor facing surface.

12. A molded motor comprising:
the stator unit according to any one of claims 1 to 11, and
the rotor that faces the stator core included in the stator unit.

13. A method of manufacturing a stator unit, the method comprising:
a first step of disposing a stator having a stator core and a coil wound around the stator core in a mold; and
a second step of molding a molded resin that covers the stator by injecting a liquid resin into the mold and curing the liquid resin, wherein
in the first step and the second step, the stator core is supported by a pin, and
the pin supports a surface of the stator core other than a rotor facing surface.

14. The method according to claim 13, wherein
the rotor facing surface is an inner peripheral surface of the stator core.

15. The method according to claim 13 or 14, wherein
the pin supports an outer surface of the stator core on a side.

16. The method according to claim 13 or 14, wherein
the pin supports an outer surface of the stator core in a vertical direction.

17. The method according to claim 13 or 14, wherein
the pin has a step, and
the stator core is supported by the step of the pin.

18. The method according to any one of claims 13 to 17, wherein
in the second step, a pin hole into which the pin is inserted is prevented from being formed in the molded resin by removing the pin from the liquid resin before the liquid resin is cured.

19. The method according to any one of claims 13 to 17, further comprising
a step of filling a pin hole formed by removing the pin from the molded resin with resin after the second step.

20. The method according to any one of claims 13 to 19, wherein
the molded resin covers the rotor facing surface.
